# EUROPÄISCHE PATENTSCHRIFT

(11) **EP 1 849 811 B1**
(45) Veröffentlichungstag und Bekanntmachung des Hinweises auf die Patenterteilung: **11.11.2009**
(21) Anmeldenummer: 07106004.0
(22) Anmeldetag: 12.04.2007
(51) Int. Cl.: C08G 18/48, C08G 18/73, C08G 18/75, C08G 18/22

(54) **Wieder ablösbarer Haftklebstoff aus Polyurethan**
Removable adhesive agent made of polyurethane
Auto-adhésif réamovible en polyuréthane

(30) Priorität: 28.04.2006 DE 102006020482
(43) Veröffentlichungstag der Anmeldung: 31.10.2007
(73) Patentinhaber: TESA SE, 20253 Hamburg (DE)
(72) Erfinder: Schümann, Dr. Uwe, 25421, Pinneberg (DE); Weiland, Kirstin, 21035, Hamburg (DE); Hesse, Philippe, 21244, Buchholz (DE)

(56) Entgegenhaltungen:
- EP-A- 1 469 024
- EP-A1- 1 469 055

## Beschreibung

Die Erfindung betrifft einen Haftklebstoff auf Basis eines chemisch vernetzten Polyurethans, der auf polaren Kunststoffoberflächen gut haftet, auch nach längerer Verklebungsdauer weich und leicht sowie ohne zu rattern wieder ablösbar ist, die Kunststoffoberflächen beim Ablösen nicht schädigt, keine Rückstände oder fettig aussehende Flecken hinterlässt, der weiterhin mehrfach verwendbar, abwaschbar und lichtstabil ist, des Weiteren Reaktivbeschichtungsverfahren zu dessen lösemittel- und wasserfreier kontinuierlicher Herstellung sowie die Verwendung des Haftklebstoffs zur Herstellung von selbstklebenden Artikeln.

Haftklebrige beziehungsweise eigenklebrige Eigenschaften sind für Polyurethane nicht typisch. Obwohl Polyurethane in der Rangliste der Kunststoffe hinsichtlich der produzierten Mengen auf Platz fünf stehen, spielen Haftklebstoffe aus diesem Material wirtschaftlich nur eine sehr untergeordnete Rolle.

Dennoch sind Haftklebstoffe aus Polyurethan seit langem bekannt und werden in vielfältiger Weise beschrieben.

Der Effekt der Haftklebrigkeit kann durch den Zusatz von Klebrigmacher-Harzen und/oder Weichmachern zum Polyurethan-Grundpolymer erzielt werden. Diese Methode wird zum Beispiel in US 3,437,622 A (Dahl et al., Continental Tapes), US 3,718,712 A (Tushaus et al., 3M), US 4,087,392 A (Hartmann et al., BASF), DE 19 04 102 A1 (Hagenweiler, BASF) und JP 2000 256 639 A1 (Toyo) beschrieben.

Derartige Haftklebstoffe haben in der Regel den Nachteil, nicht selektiv nur auf bestimmten Untergründen zu haften. Sie ziehen außerdem nach längerer Verklebungsdauer meist stark auf die Untergründe auf und sind somit oft nicht wieder ablösbar. Weiterhin kann das Klebrigmacherharz in die verklebten Oberflächen migrieren und dort fettig aussehende Flecken hinterlassen.

Ein starkes Aufziehen auf vielen Haftuntergründen, eine dadurch bedingte schwierige Wiederablösbarkeit sowie die Neigung, auf vielen Haftuntergründen fettig aussehende Flecken zu hinterlassen, ist insbesondere auch bei denjenigen Haftklebstoffen zu beobachten, bei denen die Haftklebrigkeit durch eine Untervernetzung, also einen Unterschuss an Isocyanatgruppen gegenüber den mit den Isocyanatgruppen reagierenden Gruppen wie zum Beispiel Hydroxyl- oder Aminogruppen, erzielt wird.
Nach dem Prinzip der Untervernetzung konzipierte Haftklebstoffe sind zum Beispiel in US 5,157,101 A (Orr, Norwood), DE 24 35 218 A1 (Adsley et al., Adhesive Tapes), JP 59 227 922 A1 (Sanyo), US 3,930,102 A (Szonn et al., Beiersdorf), US 5,714,543 A (Kydonieus et al., Bristol Myers Squibb), EP 0 597 636 A1 (Kydonieus et al., Squibb) und US 5,591,820 A (Kydonieus et al., Squibb) beschrieben.

In eine sehr ähnliche Kategorie mit analogen Schwächen fallen Polyurethan-Haftklebstoffe, die Monoole enthalten. Derartige Polyurethane sind ebenfalls untervernetzt und enthalten somit höhere Anteile an migrierfähigen Polyurethan-Einheiten mit geringem Molekulargewicht.
Polyurethan-Haftklebstoffe auf dieser Basis sind zum Beispiel aus EP 0 882 749 A1 (lkeda et al., Nitto), US 5,227,409 A (Mobley et al., Dow) und US 5,102,714 A (Mobley et al., Dow) bekannt.

In einem weiteren Typus von Haftklebstoffen aus Polyurethan werden Hydroxylgruppen tragende, Kohlenstoff-Kohlenstoff-Doppelbindungen enthaltende Polyolkomponenten eingesetzt. Polyurethan-Haftklebstoffe auf dieser Basis sind zum Beispiel in JP 02 003 476 A1 (Tsubota et al., Shinko), WO 98/30648 A1 (Gerard et al., Shell), JP 59 230 076 A1 (Sekisui), JP 2001 146 577 A1 (Toyo), US 3,879,248 A (Kest), US 3,743,616 A (Kest), US 3,743,617 A (Kest), US 5,486,570 A (St. Clair, Shell) und US 3,515,773 A (Dahl et al., Continental Tapes) aufgeführt. Nachteilig ist die oxidative Empfindlichkeit dieser Haftklebstoffe, hervorgerufen durch die Doppelbindungen in der Polymerhauptkette. Dies führt nach einiger Zeit zu einer Verlackung oder zu einem Abstumpfen der haftklebrigen Oberfläche. Weiterhin enthalten die meisten Haftklebstoffe dieses Typus noch zusätzlich Harze, was die bereits weiter oben beschriebenen Nachteile zur Folge hat.

Ein spezieller Kohlenstoff-Kohlenstoff-Doppelbindungen enthaltender Polyurethan-Haftklebstoff, basierend auf dem Naturprodukt Rizinusöl, wird in US 3,246,049 A (Webber, Norton) beschrieben. Auch hier ist als Schwäche die oxidative Empfindlichkeit anzusehen.

In EP 0 979 835 A1 (Questel et al., Elf Atochem) werden Hydroxyl-terminierte Polyalkylene als Polyol-Komponente vorgeschlagen, womit das Problem der oxidativen Empfindlichkeit gelöst wäre. Die Zusammensetzungen sind allerdings feuchtigkeitshärtend, erreichen somit eine hohe kohäsive Endfestigkeit und sind nicht mehrfach verwendbar, so dass sie für reversible Verklebungen ungeeignet sind. Zudem enthalten sie Klebrigmacherharze und Weichmacher, deren Nachteile bereits weiter oben beschrieben wurden.

Feuchtigkeitshärtende Polyurethan-Haftklebstoffe werden außerdem zum Beispiel auch noch in US 4,661,542 A (USM), JP 63 189 486 A1 (Sanyo) und AU 86 53399 A (von Voithenberg et al., Emhart) beschrieben.

Ein Polyurethan-Haftklebstoff auf Basis von hydrierten Polybutadienen wird in JP 01 156 386 A1 (Uehara et al., Hitachi) beschrieben. Nachteilig ist hier die Notwendigkeit einer Elektronenstrahlvernetzung, die einen erheblichen technischen Aufwand bedeutet.

Ein Polyurethan-Haftklebstoff, der ebenfalls durch Elektronenstrahlen gehärtet werden muss, ist aus JP 63 260 977 A1 (Uehara et al., Hitachi) bekannt. Dort werden Polyether als Polyol-Komponente eingesetzt.

In einigen Schriften werden Polyurethan enthaltende Blends oder Polyurethan-Copolymerisate mit haftklebrigen Eigenschaften beschrieben. Beispiele sind US 5,910,536 A (Kydonieus et al., Bristol Myers Squibb), US 5,714,543 A (Shah et al., Bristol Myers Squibb) und US 4,626 475 A (Barnett et al., Ashland Oil). Diese Haftklebstoffe zeichnen sich in der Regel durch einen erhöhten Tack aus und sind daher von empfindlichen Substraten nur schwer ohne Schädigung zu entfernen. Ihre Haftklebrigkeit ist im Regelfall nicht selektiv auf bestimmte Haftuntergründe beschränkt.

Polyurethan-Haftklebstoffe mit speziellen Zusatzeigenschaften wie zum Beispiel Flammfestigkeit oder elektrische Leitfähigkeit werden zum Beispiel in EP 1 108 768 A1 (Wong, Tyco) oder US 4, 855,077 A (Hata et al., Takiron) beschrieben.

Geschäumte Polyurethane mit haftklebrigen Eigenschaften sind ebenfalls bekannt. Beispielhaft seien die DE 24 35 217 A1 (Adsley et al., Adhesive Tapes) genannt sowie die Beschreibungen hydrophiler Schäume in DE 42 33 289 A1 (Kenndoff et al., Beiersdorf) und WO 94/07935 A1 (Kenndoff et al., Beiersdorf).
Grundsätzlich haben geschäumte Polyurethane durch die Vergrößerung der Oberfläche den Nachteil einer erhöhten oxidativen Empfindlichkeit sowie einer erhöhten Lichtempfindlichkeit. In der Praxis hat sich gezeigt, dass sie auf den meisten Untergründen stark aufziehen und entweder nur unter Schädigung abziehbar sind oder aber, insbesondere im Falle der durch Superabsorber-Zusätze hydrophil eingestellten Schäume, mit dem Untergrund in einer Weise in Wechselwirkung treten, dass es zur Fleckenbildung kommt.

Polyurethane mit haftklebrigen Eigenschaften können, wie in JP 2000 073 040 A1 (Toyo) und JP 2000 256 638 A1 (Toyo) aufgezeigt wird, auch durch Verwendung von sowohl Polyethern als auch Polyestern sowie zweier unterschiedlicher Katalysatoren innerhalb einer Polyolkomponenten-Rezeptur erhalten werden. Nachteilig daran ist vor allem die durch die Rezepturen bedingte Erhöhung an Komplexität in der Herstellung.

In JP 2000 328 034 A1 (Toyo), US 3,761,307 A (Dahl) und US 3,925,283 A (Dahl, Continental Tapes) werden haftklebrige Polyurethan/-harnstoffe beschrieben, die durch Einbau zusätzlicher aminischer Kettenverlängerer beziehungsweise Vernetzer in das Polymer erhalten werden. Als nachteilig werden die Komplexität in der Herstellung empfunden sowie die vermutete geringe Selektivität der Haftklebrigkeit auf unterschiedlichen Untergründen.

In DE 21 39 640 A1 (Dollhausen et al., Bayer) wird ein Haftklebstoff auf Basis eines aromatischen Diisocyanatourethans beschrieben. Nachteilig ist vor allem die für aromatische Polyurethane typische Vergilbungsneigung.

Zur Erzielung haftklebriger Eigenschaften werden in DE 100 30 908 A1 (Bolte et al., Henkel) und in EP 0 081 103 A1 (Miyake et al., Takeda) die Verwendung zweier unterschiedlicher Isocyanate innerhalb einer Polyurethan-Zusammensetzung vorgeschlagen. Auch in diesen Fällen werden die Komplexität in der Herstellung als nachteilig empfunden sowie eine geringe Selektivität der Haftklebrigkeit auf unterschiedlichen Untergründen.

In WO 97/22642 A1 (Chang et al., Bristol Myers Squibb) wird vorgeschlagen, zur Herstellung eines Haftklebstoffs ein NCO-terminiertes Prepolymer und eine Polyhydroxyverbindung so lange bei einer bestimmten Temperatur zusammen zu erhitzen, bis ein Gelanteil von 30 bis 40 % erhalten wird. Nachteilig an dieser Methode ist die geringe Selektivität der Haftklebrigkeit auf unterschiedlichen Untergründen, die sich aus dem relativ niedrigen Gelgehalt ergibt.

Aus US 3,796,678 A (Bartizal, 3M) ist ein Polyurethan-Haftklebstoff auf Basis verkappter Isocyanat-Prepolymere bekannt, der in der Herstellung auf Wasser oder organische Lösemittel angewiesen ist. Als nachteilig werden die komplexe Art der Herstellung angesehen sowie die Notwendigkeit, Wasser oder Lösemittel einsetzen zu müssen.

Ein Polyurethan-Latex-Haftklebstoff wird in WO 98/31760 A1 (Schrock et al., Dow Chemical) beschrieben. Nachteilig ist die Notwendigkeit einer Trocknung, wodurch es entweder unmöglich oder zumindest sehr zeitaufwendig ist, blasenfreie Haftklebstofffilme größerer Dicke zu erzielen.

In einigen Schriften wird ein Polyurethan-Haftklebstoff über die Vernetzungsdichte definiert. In GB 1,113,925 A (Weller) und GB 1,216,672 A (Grindley) werden Kettenlängen zwischen den Vernetzungspunkten von 130 bis 285 Kettenatomen beziehungsweise mehr als 285 Kettenatomen vorgeschlagen. In der Praxis hat sich gezeigt, dass eine Steuerung der Haftklebeeigenschaften über das Kriterium Kettenlänge allein nicht möglich ist. Eine zu geringe Vernetzungsdichte hat ein starkes Aufziehen auf den meisten Untergründen nach längerer Verklebungsdauer zur Folge, eine zu hohe Vernetzungsdichte führt zu Haftklebstoffen mit unzureichender Haftklebrigkeit. Eine untergrundspezifische Selektivität der Haftklebeeigenschaften wird nicht erreicht.

In EP 1 088 871 A1 (Heguri et al., Sekisui) wird für das verwendete Polyisocyanat eine bestimmte Distanz zwischen den Isocyanatgruppen beziehungsweise ein bestimmter Vernetzungsgrad vorgeschrieben. Das Molekulargewicht zwischen zwei Isocyanatgruppen innerhalb des Polyisocyanats soll 220 bis 570 betragen. Auch diese Art der Steuerung der Vernetzungsdichte über die Kettenlänge innerhalb des Polyisocyanats dürfte die untergrundspezifische Selektivität der Haftklebeeigenschaften nicht verbessern.

Auch in US 6,040,028 A (Cline et al., Bayer) wird ein Polyurethan-Klebstoff (Kontaktklebstoff) über das Molekulargewicht zwischen Vernetzungspunkten definiert. Vorgeschrieben wird ein Molekulargewicht zwischen 7000 und 16000. Weitere Einschränkungen werden unter anderem dahingehend gemacht, dass 0 bis 10 % der Polyole ein Molekulargewicht von 60 bis 400 haben müssen und 90 bis 100 % der Polyole ein Molekulargewicht von 1800 bis 12000.
Auch hier muss angenommen werden, dass die Haftklebeeigenschaften nicht selektiv untergrundspezifisch sind und dass es auf den meisten Untergründen zu einem starken Aufziehen nach längerer Verklebungsdauer kommt, da die Vernetzungsdichte relativ gering ist und keine Hinweise auf eine mögliche Lösung des Problems gegeben werden.

In WO 01/62818 A1 (Hansen et al., 3M) wird vorgeschlagen, zur Herstellung eines Polyurethan-Haftklebstoffs zwei Polyole oder anderweitige mit NCO-Gruppen reagierende Materialien mit Isocyanaten umzusetzen, wobei sich die mit den Isocyanaten reagierenden Komponenten dahingehend voneinander unterscheiden, dass eine ein Molekulargewicht größer 2000 und eine ein Molekulargewicht kleiner 2000 hat.
Derartige Haftklebstoffe sind unter anderem aus US 5,227,409 A und US 3,437,622 A bekannt, auch hinsichtlich der Einschränkung, dass es sich bei den mit den Isocyanaten
reagierenden Komponenten fast ausschließlich um Diole handelt. Ferner sind derart zusammengesetzte Polyurethane auch bereits in EP 1 095 993 A1 und EP 1 101 807 A1 vorbeschrieben, wobei es sich in den letztgenannten Beispielen nicht um Zusammensetzungen zur Erzielung von Haftklebstoffen handelt. Das vorgeschlagene Reaktionsprodukt in WO 01/62818 A1 ist somit nicht eindeutig ein Haftklebstoff. Hinweise auf eine untergrundspezifische Selektivität der Haftklebeeigenschaften werden nicht gegeben.

Aufgabe der Erfindung ist es, einen Haftklebstoff zur Verfügung zu stellen, der auf polaren Kunststoffoberflächen gut haftet, leicht und weich sowie ohne zu rattern und ohne die Kunststoffoberflächen beim Ablösen zu schädigen, Rückstände oder fettig aussehende Flecken zu hinterlassen wieder ablösbar ist, der weiterhin mehrfach verwendbar, abwaschbar und lichtstabil ist, und der die geschilderten Nachteile des Standes der Technik nicht oder nicht in dem beschriebenem Maße zeigt.

Gelöst wird diese Aufgabe durch einen Haftklebstoff auf Basis von Polyurethan, wie er im Hauptanspruch niedergelegt ist. Gegenstand der Unteransprüche sind dabei vorteilhafte Weiterbildungen des Haftklebstoffs. Des Weiteren umfasst die Erfindung Verfahren zum Herstellen des Haftklebstoffs sowie dessen Verwendung.

Demgemäß betrifft die Erfindung einen Haftklebstoff auf Basis von Polyurethan, wobei sich das Polyurethan aus folgenden miteinander zur Reaktion gebrachten Ausgangsstoffen in den angegeben Verhältnissen zusammensetzt:
a) mindestens einem aliphatischen oder alicyclischen Polyisocyanat, wobei deren Funktionalität jeweils kleiner oder gleich drei ist,
b) einer Kombination aus mindestens einem Triol A auf Basis Polypropylenglykol mit einem mittleren zahlengemittelten Molekulargewicht Mₙ von kleiner oder gleich 1000 und einem Triol B auf Basis Polypropylenglykol mit einem mittleren zahlengemittelten Molekulargewicht Mₙ von größer oder gleich 1000, bevorzugt größer oder gleich 3000, wobei das Verhältnis der Anzahl der Hydroxylgruppen der Triol-Komponente A zu der Anzahl der Hydroxylgruppen der Triol-Komponente B zwischen größer 0 und 12 liegt.

Das Verhältnis der Anzahl der Isocyanat-Gruppen zur Gesamtanzahl der Hydroxylgruppen liegt zwischen 0,8 und 1,15, bevorzugt zwischen 0,95 und 1,05.

Der Katalysator für die Reaktion zum Polyurethan ist oder enthält eine Bismut und Kohlenstoff enthaltende Verbindung, bevorzugt ein Bismutcarboxylat oder ein Bismutcarboxylat-Derivat.

Um Polyurethane mit ausreichender Lichtstabilität zu erzeugen, müssen aliphatische oder alicyclische Polyisocyanate beziehungsweise Polyisocyanate mit nicht aromatisch gebundenen Isocyanatgruppen verwendet werden. Überraschend wurde gefunden, dass aliphatische oder alicyclische Polyisocyanate geeignet sind, um auch das sonstige gewünschte Eigenschaftsprofil der Polyurethan-Haftklebstoffe entsprechend der Aufgabe der Erfindung zu erzeugen. Insbesondere die oberflächenspezifische leichte und weiche Ablösbarkeit lässt sich durch Verwendung von aliphatischen oder alicyclischen Polyisocyanaten einstellen.

In einer besonders vorteilhaften Ausführungsform werden als aliphatische oder alicyclische Polyisocyanante Diisocyanate mit jeweils unsymmetrischer Molekülstruktur, in denen also die beiden Isocyanatgruppen jeweils eine unterschiedliche Reaktivität besitzen, verwendet. Insbesondere die sonst für haftklebrige Polyurethane typische Neigung, auf Papier oder Pappe fettig aussehende Flecken zu hinterlassen, wird durch den Einsatz von aliphatischen oder alicyclischen Diisocyanaten mit unsymmetrischer Molekülstruktur deutlich reduziert. Unsymmetrische Molekülstruktur bedeutet, dass das Molekül keine Symmetrieelemente (zum Beispiel Spiegelebenen, Symmetrieachsen, Symmetriezentren) besitzt, dass also keine Symmetrieoperation ausgeführt werden kann, die ein mit dem Ausgangsmolekül deckungsgleiches Molekül erzeugt.

Beispiele geeigneter, erfindungsgemäßer Polyisocyanate sind Butan-1,4-diisocyanat, Tetramethoxybutan-1,4-diisocyanat, Hexan-1,6-diisocyanat, Ethylendiisocyanat, 2,2,4-Trimethyl-hexamethylendiisocyanat, Ethylethylendiisocyanat, Dicyclohexylmethandiisocyanat, 1,4-Diisocyanatocyclohexan, 1,3-Diisocyanatocyclohexan, 1,2-Diisocyanatocyclohexan, 1,3-Diisocyanatocyclopentan, 1,2-Diisocyanatocyclopentan, 1,2-Diisocyanatocyclobutan, 1-lsocyanatomethyl-3-isocyanato-1,5,5-trimethylcyclohexan (Isophorondiisocyanat), 1-Methyl-2,4-diisocyanatocyclohexan, 1,6-Diisocyanato-2,2,4-trimethylhexan, 1,6-Diisocyanato-2,4,4-trimethylhexan, 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-lsocyanato-1-(4-isocyanatobut-1-yl)-1,3,3-trimethyl-cyclohexan, 1-lsocyanato-2-(3-isocyanatoprop-1-yl)-cyclohexan, 1-lsocyanato-2-(2-isocyanatoeth-1-yl)-cyclohexan, 2-Heptyl-3,4-bis(9-isocyanatononyl)-1-pentyl-cyclohexan, Norbonandiisocyanatomethyl, chlorierte, bromierte, schwefel- oder phosphorhaltige aliphatische oder alicyclische Diisocyanate sowie Derivate der aufgeführten Diisocyanate, insbesondere dimerisierte oder trimerisierte Typen.

In einer bevorzugten Ausführungsform wird Dicyclohexylmethandiisocyanat verwendet. In einer besonders bevorzugten Ausführungsform wird Isophorondiisocyanat verwendet.

Hinsichtlich der stofflichen und mengenmäßigen Zusammensetzung der mit dem Polyisocyanat zur Reaktion gebrachten Edukte wurde überraschend gefunden, dass Kombinationen aus mindestens einem Triol A auf Basis Polypropylenglykol mit einem mittleren zahlengemittelten Molekulargewicht Mₙ von kleiner oder gleich 1000 und mindestens einem Triol B auf Basis Polypropylenglykol mit einem mittleren zahlengemittelten Molekulargewicht Mₙ von größer oder gleich 1000, bevorzugt größer oder gleich 3000, geeignet sind, um Polyurethane mit dem gewünschten Eigenschaftsprofil entsprechend der Aufgabe der Erfindung zu erzeugen.

Als Polypropylenglykole können alle handelsüblichen Polyether auf Basis von Propylenoxid und eines trifunktionellen Starters eingesetzt werden. Darunter fallen sowohl die konventionell, das heißt im Regelfall mit einem basischen Katalysator wie zum Beispiel Kaliumhydroxid, hergestellten Polypropylenglykole, als auch die besonders reinen Polypropylenglykole, die DMC (Double metal cyanide)-katalysiert hergestellt werden und deren Herstellung zum Beispiel in US 5,712,216 A, US 5,693,584 A, WO 99/56874 A1, WO 99/51661 A1, WO 99/59719 A1, WO 99/64152 A1, US 5,952,261 A, WO 99/64493 A1 und WO 99/51657 A1 beschrieben wird. Charakteristisch an den DMC-katalysierten Polypropylenglykolen ist, dass die "nominale" beziehungsweise theoretische Funktionalität von exakt drei im Falle der Triole auch tatsächlich annähernd erreicht wird. Bei den konventionell hergestellten Polypropylenglykolen ist die "wahre" Funktionalität stets etwas geringer als die theoretische, und zwar insbesondere bei Polypropylenglykolen mit höherem Molekulargewicht. Ursache ist eine Umlagerungs-Nebenreaktion des Propylenoxids zum Allylalkohol.

Weiterhin können auch alle Polypropylenglykol-Triole eingesetzt werden, in denen Ethylenoxid endständig mit einpolymerisiert ist, was in vielen handelsüblichen Polypropylenglykolen der Fall ist, um eine erhöhte Reaktivität gegenüber Isocyanaten zu erzielen.

Durch Variation des Verhältnisses der Anzahl der Hydroxylgruppen des Triols A zu der des Triols B innerhalb der gesetzten Grenzen kann die Klebkraft anwendungsgerecht eingestellt werden. Überraschend wurde gefunden, dass die Klebkraft mit zunehmendem Anteil an OH-Gruppen des Triols A im Verhältnis zur Anzahl der OH-Gruppen des Triols B zunächst ein Minimum durchläuft und dann deutlich ansteigt. Der Klebkraftbereich, der innerhalb der angegeben Grenzen eingestellt werden kann, liegt in den bevorzugten Ausführungsformen ungefähr zwischen 0,01 und 2,0 N/cm, kann aber in anderen Ausführungsformen auch Werte bis ca. 4,0 N/cm erreichen.

In einer möglichen Ausführungsform enthält der Polyurethan-basierte Haftklebstoff weitere Rezeptierungsbestandteile wie zum Beispiel Katalysatoren, Alterungsschutzmittel (Antioxidantien), Lichtschutzmittel, UV-Absorber, rheologische Additive, Farbpigmente sowie sonstige Hilfs-, Effekt- und Zusatzstoffe.

Bei der Auswahl dieser Stoffe ist darauf zu achten, dass diese Stoffe keine Migrationstendenz zum zu verklebenden Substrat hin haben, damit es nicht auf diese Weise zur Fleckenbildung kommt. Aus dem gleichen Grund ist die Konzentration dieser Stoffe, insbesondere der flüssigen, in der Gesamtzusammensetzung möglichst niedrig zu halten. Die zusätzliche Verwendung von Weichmachern oder Klebrigmacherharzen sollte vermieden werden.

Um die Reaktion zwischen der Isocyanat-Komponente und der mit dem Isocyanat reagierenden Komponente weiter zu beschleunigen, können zusätzliche, dem Fachmann bekannte Katalysatoren wie zum Beispiel tertiäre Amine oder zinnorganische Verbindungen eingesetzt werden.

Die Verwendung von Antioxidantien ist vorteilhaft, aber nicht zwingend notwendig.

Zu den geeigneten Antioxidantien zählen zum Beispiel sterisch gehinderte Phenole, Hydrochinone, sterisch gehinderte Amine, organische Schwefelverbindungen oder organische Phosphorverbindungen.

Lichtschutzmittel und UV-Absorber können ebenso eingesetzt werden, sind aber nicht zwingend notwendig.

Als Lichtschutzmittel finden vorzugsweise die bei Gaechter und Müller, Taschenbuch der Kunststoff-Additive, München 1979, bei Kirk-Othmer (3.) 23, 615 - 627, bei Encycl. Polym. Sci. Technol. 14, 125 - 148 und bei Ullmann (4.)8, 21; 15, 254, 676 offenbarten Verwendung.

Beispiele für rheologische Additive sind pyrogene Kieselsäuren, Schichtsilikate (Bentonite), hochmolekulare Polyamidpulver oder Rhizinusölderivat-Pulver.

Die eingesetzten Farbpigmente können organischer oder anorganischer Natur sein. Beispiele sind alle Arten organischer oder anorganischer Farbpigmente, insbesondere Weißpigmente wie etwa Titandioxid.

Der Haftklebstoff liegt einer vorteilhaften Weiterbildung der Erfindung in Form von Stanzlingen oder geschnittenen Formteilen vor.

Der Haftklebstoff wird in einer bevorzugten Ausführungsform nach dem im Folgenden beschriebenen Verfahren kontinuierlich hergestellt:

Es werden in einem Behälter A im Wesentlichen die vorgemischte Polypropylenglykol-Kombination (Polyol-Komponente) und in einem Behälter B im Wesentlichen die Isocyanat-Komponente vorgelegt, wobei gegebenenfalls die weiteren Rezeptierungsbestandteile diesen Komponenten bereits zuvor in einem üblichen Mischverfahren zugemischt wurden.
Die Polyol- und die Isocyanat-Komponente werden über Präzisionspumpen durch den Mischkopf oder das Mischrohr einer Mehrkomponenten-Misch- und Dosieranlage gefördert, dort homogen vermischt und somit zur Reaktion gebracht. Die somit gemischten, miteinander chemisch reagierenden Komponenten werden unmittelbar danach auf ein bahnförmiges Trägermaterial aufgebracht, das sich bevorzugt mit konstanter Geschwindigkeit bewegt. Die Art des Trägermaterials richtet sich nach dem herzustellenden Artikel. Es kann ein antiadhäsiv ausgerüstetes Material sein (zum Beispiel Trennpapier oder Trennfolie) oder ein beliebiges anderes bahnförmiges Material, zum Beispiel eine Kunststofffolie (zum Beispiel Polyester, PE, PP, PVC), ein Papier, gekrepptes Papier, ein Gewebe, ein Vlies oder eine Metallfolie. Das mit der reagierenden Polyurethanmasse beschichtete Trägermaterial wird durch einen Wärmekanal geführt, in dem die Polyurethanmasse zum Haftklebstoff aushärtet. Das Auftragsgewicht der Polyurethanmasse ist frei wählbar. Es richtet sich nach dem herzustellenden Artikel. Das beschichtete Trägermaterial wird abschließend in einer Wickelstation aufgewickelt.

Das beschriebene Verfahren ermöglicht es, lösemittel- und wasserfrei zu arbeiten. Das lösemittel- und wasserfreie Arbeiten ist die bevorzugte Verfahrensweise, ist aber nicht zwingend notwendig. Um zum Beispiel besonders geringe Auftragsgewichte zu erzielen, können die Komponenten in geeigneter Weise verdünnt werden. Um die Verankerung der Polyurethanmasse auf den nicht antiadhäsiv ausgerüsteten bahnförmigen Materialien zu verbessern, können alle bekannten Methoden der Oberflächenvorbehandlung wie beispielsweise Corona-Vorbehandlung, Beflammung, Gasphasenbehandlung (zum Beispiel Fluorierung) eingesetzt werden. Ebenso können alle bekannten Methoden der Primerung eingesetzt werden, wobei die Primerschicht sowohl aus Lösungen oder Dispersionen heraus auf die Polyolefinfolie aufgetragen werden kann als auch im Extrusions- oder Coextrusionsverfahren.

Um die Abrolleigenschaften der gewickelten Rolle zu verbessern, kann die Rückseite des bahnförmigen Materials mit einem Trennlack (Releaselack) vorbeschichtet werden oder aber eine trennende co- oder aufextrudierte Rückseitenbeschichtung tragen.

Ein erfindungsgemäßer Haftklebstoff auf Basis von Polyurethan zeigt hervorragende Produkteigenschaften, die auch für den Fachmann derartig nicht vorherzusehen waren.

Der Haftklebstoff ist geeignet, um beispielsweise kleine Gegenstände mit empfindlichen Oberflächen aus polarem Kunststoff, Glas oder Metall so zu befestigen beziehungsweise zu fixieren, dass einerseits ein sicherer Halt dieser Gegenstände gegeben ist, diese Gegenstände andererseits jederzeit, auch nach Wochen oder Monaten problemlos, leicht und weich sowie ohne zu rattern abgelöst werden können, ohne dass die Oberflächen der Gegenstände durch den Klebe- und Ablösevorgang beschädigt, verunreinigt oder zerstört werden. Der Haftklebstoff kann als Teil eines Gesamtklebekonzepts zum Verkleben von Gegenständen in Zeitschriften, Büchern, Briefen oder generell auf Papieren eingesetzt werden und nach dem Ablösen der Gegenstände in den Zeitschriften, Büchern, Briefen oder generell auf den Papieren verbleiben, da er auf Papier nur sehr schwach haftet und es somit später nicht zum Zusammenkleben oder zumindest nicht zum irreversiblen Zusammenkleben einzelner Seiten in den Zeitschriften, Büchern, Briefen oder generell auf übereinander gelegten Papieren kommt. Da der Haftklebstoff gemäß obiger Beschreibung auch auf menschlicher Haut im Wesentlichen nicht oder zumindest nur schwach haftet, entsteht bei Berührung kein unangenehmes Klebrigkeitsgefühl.

Der Haftklebstoff hinterlässt nach dem Ablösen keine Rückstände oder fettig aussehende Flecken auf den Gegenständen und schädigt die Gegenstände nicht, insbesondere auch dann nicht, wenn diese gegenüber mechanischen Einflüssen empfindlich sind, was bei Gegenständen mit sehr glatten Oberflächen oft der Fall ist.

Der Haftklebstoff gemäß obiger Beschreibung ist mehrfach verwendbar, ohne dass es zu Einbußen in der Klebkraft kommt. Wird der Haftklebstoff unverklebt und ohne Schutzabdeckung längere Zeit in einer normalen Umgebung aufbewahrt, so staubt er naturgemäß ein, so dass sich seine Klebkraft dadurch reduziert. Eine solche Staubschicht ist mit normalem Leitungswasser jederzeit leicht wieder entfernbar. Nach dem Trocknen ist die ursprüngliche Klebkraft sofort wieder in vollem Umfang hergestellt. Selbst große Mengen an Staub, Sand oder Pulvern aller Korngrößen lassen sich durch Abwaschen leicht wieder entfernen

Dadurch, dass der Haftklebstoff lichtstabil ist, kann er auch zur Verklebung auf licht- und sonnenexponierten Gegenständen, Materialien oder Untergründen eingesetzt werden, zum Beispiel auf oder hinter Fensterscheiben oder Autoscheiben. Generell ist der Haftklebstoff für Innen- wie für Außenanwendungen gleichermaßen geeignet.

Zusammenfassend ist der erfindungsgemäße Haftklebstoff besonders geeignet zu:
- Herstellung von selbstklebenden Artikeln
- Herstellung von Adhäsionsfolien
- beschädigungs- und rückstandsfrei wieder ablösbare Befestigung von leichten Gegenständen mit empfindlichen Oberflächen, zum Beispiel aus polarem Kunststoff, Glas oder Metall

Im Folgenden soll die Erfindung anhand von Beispielen erläutert werden, ohne diese damit allerdings einschränken zu wollen.

Die folgenden Prüfmethoden wurden eingesetzt, um die nach den beschriebenen Verfahren hergestellten Muster kurz zu charakterisieren.

Die Prüfmuster wurden jeweils hergestellt, indem zunächst die Einzelstoffe der jeweiligen A-Komponenten unter Vakuum bei einer Temperatur von 70 °C ca. zwei Stunden lang gemischt wurden. Sodann wurde nach Abkühlung auf 40°C die B-Komponente entsprechend der in den einzelnen Beispielen angegebenen Mengenverhältnisse zugefügt und unter Vakuum 30 Sekunden lang homogen eingemischt. Die zunächst flüssigen, reaktiven Polyurethan-Haftklebstoffe wurden mit einem Auftragsgewicht von 50 g/m² auf eine 23 µm dicke Polyesterfolie beschichtet und bei 70°C ausgehärtet. Die Messungen erfolgten nach einer "Reifezeit" (bei Raumtemperatur) von einer Woche.
• Die Klebkraft wurde nach PSTC-101 bestimmt. Nach dieser Methode wird der Klebefilm, bestehend aus Haftklebstoffschicht und Polyesterfolie auf unterschiedlichen Haftgründen (Stahl, ABS, PS, PC, PVC) aufgebracht und anschließend unter definierten Bedingungen mittels einer Zugprüfmaschine abgezogen. Der Abzugswinkel beträgt jeweils 180°, die Abzugsgeschwindigkeit 300 mm/min. Die zum Abziehen erforderliche Kraft ist die Klebkraft, welche in der Einheit N/cm angegeben wird.
• Die Tackmessung (Messung der Oberflächenklebrigkeit) erfolgte nach der Stempelmessmethode in Anlehnung an ASTM D 2979-01 mit dem Texture Analyser TA 2 der Firma SMS (Stable Micro Systems). Nach dieser Methode wird ein zylindrischer Stahlstempel mit definierter Andruckkraft und -geschwindigkeit auf die zu untersuchende Probe gedrückt und nach definierter Zeit mit definierter Geschwindigkeit wieder abgezogen. Das Prüfergebnis ist die zum Abziehen erforderliche maximale Kraft, angegeben in der Einheit N.
Die Prüfparameter waren im Einzelnen:

| | |
|---|---|
| Zylinderradius: | 1 mm ⇒ Zylinderfläche: 3,14 mm² |
| Andruckgeschwindigkeit: | 0,1 mm/s |
| Andruckkraft: | 5 N |
| Andruckzeit: | 0,01 s |
| Abzugsgeschwindigkeit: | 0,6 mm / s |

• Die Prüfung der Lichtbeständigkeit erfolgte mit einer so genannten Sonnenlichtlampe der Firma Osram mit der Bezeichnung ULTRA-VITALUX ®, Leistungsaufnahme 300 W. Die Proben wurden aus einer Entfernung von 50 cm ununterbrochen offen bestrahlt. Die Temperatur am Ort der Probe betrug dabei jeweils ca. 60 °C. Beurteilt wurde die farbliche Veränderung des Haftklebstoffs sowie die Klebkraft-Veränderung jeweils nach einer Woche Bestrahlungsdauer. Dies entspricht ungefähr einer 10-fachen ununterbrochenen realen Sommersonnenbelastung in Mitteleuropa.

### Beispiele

In Tabelle 1 sind die zur Herstellung der Polyurethan-Haftklebstoffe verwendeten Basismaterialien aufgeführt, und zwar jeweils mit Handelsnamen und Hersteller. Die genannten Rohstoffe sind alle frei im Handel erhältlich.

**Tabelle 1: Zur Herstellung der Polyurethan-Haftklebstoffe eingesetzte Basismaterialien**

| Handelsname | Chemische Basis | mittleres zahlengemitteltes Molekulargewicht Mₙ (g/mol) | OH- bzw. NCO-Zahl (mmol OH/kg bzw. mmol NCO/kg | Hersteller / Lieferant |
|---|---|---|---|---|
| Voranol CP 450 ® | Polypropylenglykol, Triol | 400 | 6595 | Dow |
| Voranol CP 1055 ® | Polypropylenglykol, Triol | 1000 | 2781 | Dow |
| Voranol CP 3055 ® | Polypropylenglykol, Triol | 3000 | 1007 | Dow |
| Voranol CP 4755 ® | Polypropylenglykol, Triol | 4700 | 615 | Dow |
| Voranol CP 6055 ® | Polypropylenglykol, Triol | 6000 | 490 | Dow |
| Vestanat IPDI ® | Isophorondiisocyanat | | 8998 | Degussa |
| Desmodur W ® | Dicyclohexylmethandiisocyanat | | 7571 | Bayer |
| Desmodur N 3300 ® | aliphatisches Polyisocyanat auf Basis Hexamethylendiisocyan at | | 5190 | Bayer |
| Tinuvin 292 ® | sterisch gehindertes Amin, Licht- und Alterungsschutzmittel | | | Ciba |
| Tinuvin 400 ® | Triazin-Derivat, UV-Schutzmittel | | | Ciba |
| | Bismuttrisneodecanoat CAS-Nr. 34364-26-6 | | | |
| Mark DBTL ® | Dibutylzinndilaurat | | | Nordmann, Rassmann |

### Beispiel 1

Der erfindungsgemäße Polyurethan-Haftklebstoff setzt sich wie folgt zusammen:
NCO / OH - Verhältnis: 1,00
Verhältnis Anzahl OH Triol A / Anzahl OH Triol B: 10,0

| | Rohstoff | Gewichtsanteil [Gew.-%] | Anzahl der OH- bzw. NCO-Gruppen, bezogen auf den angegebenen prozentualen Gewichtsanteil |
|---|---|---|---|
| A-Komponente | Voranol CP450 ® (Triol A) | 48,3 | 318,9 mmol OH |
| | Voranol CP1055 ® (Triol B) | 11,5 | 31,9 mmol OH |
| | Bismuttrisneodecanoat | 0,3 | |
| | Tinuvin 292 ® | 0,3 | |
| | Tinuvin 400 ® | 0,6 | |
| B-Komponente | Vestanat IPDI ® | 39,0 | 350,8 mmol NCO |

Die Prüfmuster (50 g/m² Polyurethan-Haftklebstoff auf einer 23 µm dicken Polyesterfolie, siehe oben) erzielten folgende Klebkräfte:
- 0,05 N/cm auf Stahl,
- 0,06 N/cm auf ABS,
- 0,07 N/cm auf PS,
- 0,09 N/cm auf PC
- 0,09 N/cm auf PVC.

Die Prüfmuster ließen sich jeweils ohne Rattern vom Prüfuntergrund abziehen. Die Tackmessung (auf Stahl) ergab einen Wert von 0,3 N. Nach einer Woche Bestrahlung mit der Sonnenlichtlampe traten keine Veränderungen auf, weder farblich noch in der Klebkraft. Die Haftung auf Papier und Pappe war äußerst gering. Der Haftklebstoff ließ sich durch bloßes Schütteln von diesen trennen. Der Haftklebstoff wurde in einige Bücher, Zeitungen und Zeitschriften hineingeklebt. Auch nach einer Verklebungsdauer von einem halben Jahr ließen sich die entsprechend verklebten Seiten wieder problemlos voneinander trennen und der Haftklebstoff konnte mühelos entfernt werden, ohne Rückstände oder fettig aussehende Flecken zu hinterlassen und ohne die Papiere zu schädigen. Der Haftklebstoff klebte nicht an der Haut. Weiterhin war der Haftklebstoff abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprünglichen Niveau. Die Mehrfachverwendbarkeit wurde geprüft, indem der Haftklebstoff 20 Mal hintereinander auf PVC geklebt und wieder abgelöst wurde. Die Klebkraft lag anschließend immer noch auf dem ursprünglichen Niveau.

### Beispiel 2

Der erfindungsgemäße Polyurethan-Haftklebstoff setzt sich wie folgt zusammen:
NCO / OH - Verhältnis: 1,00
Verhältnis Anzahl OH Triol A / Anzahl OH Triol B: 4,0

| | Rohstoff | Gewichtsanteil [Gew.-%] | Anzahl der OH- bzw. NCO-Gruppen, bezogen auf den angegebenen prozentualen Gewichtsanteil |
|---|---|---|---|
| A-Komponente | Voranol CP450 ® (Triol A) | 39,4 | 259,7 mmol OH |
| | Voranol CP1055 ® (Triol B) | 23,3 | 64,9 mmol OH |
| | Bismuttrisneodecanoat | 0,3 | |
| | Tinuvin 292 ® | 0,3 | |
| | Tinuvin 400 ® | 0,6 | |
| B-Komponente | Vestanat IPDI ® | 36,1 | 324,6 mmol NCO |

Die Prüfmuster (50 g/m² Polyurethan-Haftklebstoff auf einer 23 µm dicken Polyesterfolie, siehe oben) erzielten folgende Klebkräfte:
- 0,02 N/cm auf Stahl,
- 0,03 N/cm auf ABS,
- 0,03 N/cm auf PS,
- 0,04 N/cm auf PC
- 0,06 N/cm auf PVC.

Die Prüfmuster ließen sich jeweils ohne Rattern vom Prüfuntergrund abziehen.
Die Tackmessung (auf Stahl) ergab einen Wert von 0,1 N. Nach einer Woche Bestrahlung mit der Sonnenlichtlampe traten keine Veränderungen auf, weder farblich noch in der Klebkraft. Die Haftung auf Papier und Pappe war äußerst gering. Der Haftklebstoff ließ sich durch bloßes Schütteln von diesen trennen. Der Haftklebstoff wurde in einige Bücher, Zeitungen und Zeitschriften hineingeklebt. Auch nach einer Verklebungsdauer von einem halben Jahr ließen sich die entsprechend verklebten Seiten wieder problemlos voneinander trennen und der Haftklebstoff konnte mühelos entfernt werden, ohne Rückstände oder fettig aussehende Flecken zu hinterlassen und ohne die Papiere zu schädigen. Der Haftklebstoff klebte nicht an der Haut. Weiterhin war der Haftklebstoff abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprünglichen Niveau. Die Mehrfachverwendbarkeit wurde geprüft, indem der Haftklebstoff 20 Mal hintereinander auf PVC geklebt und wieder abgelöst wurde. Die Klebkraft lag anschließend immer noch auf dem ursprünglichen Niveau.

### Beispiel 3

Der erfindungsgemäße Polyurethan-Haftklebstoff setzt sich wie folgt zusammen:
NCO / OH - Verhältnis: 1,00
Verhältnis Anzahl OH Triol A / Anzahl OH Triol B: 0,1

| | Rohstoff | Gewichtsanteil [Gew.-%] | Anzahl der OH- bzw. NCO-Gruppen, bezogen auf den angegebenen prozentualen Gewichtsanteil |
|---|---|---|---|
| A-Komponente | Voranol CP450 ® (Triol A) | 3,0 | 19,9 mmol OH |
| | Voranol CP1055 ® (Triol B) | 71,5 | 198,8 mmol OH |
| | Bismuttrisneodecanoat | 0,3 | |
| | Tinuvin 292 ® | 0,3 | |
| | Tinuvin 400 ® | 0,6 | |
| B-Komponente | Vestanat IPDI ® | 24,3 | 218,7 mmol NCO |

Die Prüfmuster (50 g/m² Polyurethan-Haftklebstoff auf einer 23 µm dicken Polyesterfolie, siehe oben) erzielten folgende Klebkräfte:
- 0,04 N/cm auf Stahl,
- 0,06 N/cm auf ABS,
- 0,06 N/cm auf PS,
- 0,08 N/cm auf PC
- 0,08 N/cm auf PVC.

Die Prüfmuster ließen sich jeweils ohne Rattern vom Prüfuntergrund abziehen.
Die Tackmessung (auf Stahl) ergab einen Wert von 0,2 N. Nach einer Woche Bestrahlung mit der Sonnenlichtlampe traten keine Veränderungen auf, weder farblich noch in der Klebkraft. Die Haftung auf Papier und Pappe war äußerst gering. Der Haftklebstoff ließ sich durch bloßes Schütteln von diesen trennen. Der Haftklebstoff wurde in einige Bücher, Zeitungen und Zeitschriften hineingeklebt. Auch nach einer Verklebungsdauer von einem halben Jahr ließen sich die entsprechend verklebten Seiten wieder problemlos voneinander trennen und der Haftklebstoff konnte mühelos entfernt werden, ohne Rückstände oder fettig aussehende Flecken zu hinterlassen und ohne die Papiere zu schädigen. Der Haftklebstoff klebte nicht an der Haut. Weiterhin war der Haftklebstoff abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprünglichen Niveau. Die Mehrfachverwendbarkeit wurde geprüft, indem der Haftklebstoff 20 Mal hintereinander auf PVC geklebt und wieder abgelöst wurde. Die Klebkraft lag anschließend immer noch auf dem ursprünglichen Niveau.

### Beispiel 4

Der erfindungsgemäße Polyurethan-Haftklebstoff setzt sich wie folgt zusammen:
NCO / OH - Verhältnis: 1,00
Verhältnis Anzahl OH Triol A / Anzahl OH Triol B: 4,0

| | Rohstoff | Gewichtsanteil [Gew.-%] | Anzahl der OH- bzw. NCO-Gruppen, bezogen auf den angegebenen prozentualen Gewichtsanteil |
|---|---|---|---|
| A-Komponente | Voranol CP450 ® (Triol A) | 27,8 | 183,4 mmol OH |
| | Voranol CP3055 ® (Triol B) | 45,5 | 45,8 mmol OH |
| | Bismuttrisneodecanoat | 0,3 | |
| | Tinuvin 292 ® | 0,3 | |
| | Tinuvin 400 ® | 0,6 | |
| B-Komponente | Vestanat IPDI ® | 25,5 | 229,2 mmol NCO |

Die Prüfmuster (50 g/m² Polyurethan-Haftklebstoff auf einer 23 µm dicken Polyesterfolie, siehe oben) erzielten folgende Klebkräfte:
- 0,08 N/cm auf Stahl,
- 0,12 N/cm auf ABS,
- 0,13 N/cm auf PS,
- 0,14 N/cm auf PC
- 0,16 N/cm auf PVC.

Die Prüfmuster ließen sich jeweils ohne Rattern vom Prüfuntergrund abziehen.
Die Tackmessung (auf Stahl) ergab einen Wert von 0,3 N. Nach einer Woche Bestrahlung mit der Sonnenlichtlampe traten keine Veränderungen auf, weder farblich noch in der Klebkraft. Die Haftung auf Papier und Pappe war äußerst gering. Der Haftklebstoff ließ sich durch bloßes Schütteln von diesen trennen. Der Haftklebstoff wurde in einige Bücher, Zeitungen und Zeitschriften hineingeklebt. Auch nach einer Verklebungsdauer von einem halben Jahr ließen sich die entsprechend verklebten Seiten wieder problemlos voneinander trennen und der Haftklebstoff konnte mühelos entfernt werden, ohne Rückstände oder fettig aussehende Flecken zu hinterlassen und ohne die Papiere zu schädigen. Der Haftklebstoff klebte nicht an der Haut. Weiterhin war der Haftklebstoff abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprünglichen Niveau. Die Mehrfachverwendbarkeit wurde geprüft, indem der Haftklebstoff 20 Mal hintereinander auf PVC geklebt und wieder abgelöst wurde. Die Klebkraft lag anschließend immer noch auf dem ursprünglichen Niveau.

### Beispiel 5

Der erfindungsgemäße Polyurethan-Haftklebstoff setzt sich wie folgt zusammen:
NCO / OH - Verhältnis: 1,00
Verhältnis Anzahl OH Triol A / Anzahl OH Triol B: 4,0

| | Rohstoff | Gewichtsanteil [Gew.-%] | Anzahl der OH- bzw. NCO-Gruppen, bezogen auf den angegebenen prozentualen Gewichtsanteil |
|---|---|---|---|
| A-Komponente | Voranol CP450 ® (Triol A) | 21,5 | 141,7 mmol OH |
| | Voranol CP4755 ® (Triol B) | 57,6 | 35,4 mmol OH |
| | Bismuttrisneodecanoat | 0,3 | |
| | Tinuvin 292 ® | 0,3 | |
| | Tinuvin 400 ® | 0,6 | |
| B-Komponente | Vestanat IPDI ® | 19,7 | 177,2 mmol NCO |

Die Prüfmuster (50 g/m² Polyurethan-Haftklebstoff auf einer 23 µm dicken Polyesterfolie, siehe oben) erzielten folgende Klebkräfte:
- 0,10 N/cm auf Stahl,
- 0,13 N/cm auf ABS,
- 0,17 N/cm auf PS,
- 0,19 N/cm auf PC
- 0,21 N/cm auf PVC.

Die Prüfmuster ließen sich jeweils ohne Rattern vom Prüfuntergrund abziehen.
Die Tackmessung (auf Stahl) ergab einen Wert von 0,4 N. Nach einer Woche Bestrahlung mit der Sonnenlichtlampe traten keine Veränderungen auf, weder farblich noch in der Klebkraft. Die Haftung auf Papier und Pappe war äußerst gering. Der Haftklebstoff ließ sich durch bloßes Schütteln von diesen trennen. Der Haftklebstoff wurde in einige Bücher, Zeitungen und Zeitschriften hineingeklebt. Auch nach einer Verklebungsdauer von einem halben Jahr ließen sich die entsprechend verklebten Seiten wieder problemlos voneinander trennen und der Haftklebstoff konnte mühelos entfernt werden, ohne Rückstände oder fettig aussehende Flecken zu hinterlassen und ohne die Papiere zu schädigen. Der Haftklebstoff klebte nicht an der Haut. Weiterhin war der Haftklebstoff abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprünglichen Niveau. Die Mehrfachverwendbarkeit wurde geprüft, indem der Haftklebstoff 20 Mal hintereinander auf PVC geklebt und wieder abgelöst wurde. Die Klebkraft lag anschließend immer noch auf dem ursprünglichen Niveau.

### Beispiel 6

Der erfindungsgemäße Polyurethan-Haftklebstoff setzt sich wie folgt zusammen:
NCO / OH - Verhältnis: 1,00
Verhältnis Anzahl OH Triol A / Anzahl OH Triol B: 10,0

| | Rohstoff | Gewichtsanteil [Gew.-%] | Anzahl der OH- bzw. NCO-Gruppen, bezogen auf den angegebenen prozentualen Gewichtsanteil |
|---|---|---|---|
| A-Komponente | Voranol CP450 ® (Triol A) | 31,3 | 206,7 mmol OH |
| | Voranol CP6055 ® (Triol B) | 42,2 | 20,7 mmol OH |
| | Bismuttrisneodecanoat | 0,3 | |
| | Tinuvin 292 ® | 0,3 | |
| | Tinuvin 400 ® | 0,6 | |
| B-Komponente | Vestanat IPDI ® | 25,3 | 227,4 mmol NCO |

Die Prüfmuster (50 g/m² Polyurethan-Haftklebstoff auf einer 23 µm dicken Polyesterfolie, siehe oben) erzielten folgende Klebkräfte:
- 0,51 N/cm auf Stahl,
- 0,62 N/cm auf ABS,
- 0,76 N/cm auf PS
- 0,85 N/cm auf PC
- 0,80 N/cm auf PVC.

Die Prüfmuster ließen sich jeweils ohne Rattern vom Prüfuntergrund abziehen.
Die Tackmessung (auf Stahl) ergab einen Wert von 1,2 N. Nach einer Woche Bestrahlung mit der Sonnenlichtlampe traten keine Veränderungen auf, weder farblich noch in der Klebkraft. Die Haftung auf Papier und Pappe war äußerst gering. Der Haftklebstoff ließ sich durch bloßes Schütteln von diesen trennen. Der Haftklebstoff wurde in einige Bücher, Zeitungen und Zeitschriften hineingeklebt. Auch nach einer Verklebungsdauer von einem halben Jahr ließen sich die entsprechend verklebten Seiten wieder problemlos voneinander trennen und der Haftklebstoff konnte mühelos entfernt werden, ohne Rückstände oder fettig aussehende Flecken zu hinterlassen und ohne die Papiere zu schädigen. Der Haftklebstoff klebte nicht an der Haut. Weiterhin war der Haftklebstoff abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprünglichen Niveau. Die Mehrfachverwendbarkeit wurde geprüft, indem der Haftklebstoff 20 Mal hintereinander auf PVC geklebt und wieder abgelöst wurde. Die Klebkraft lag anschließend immer noch auf dem ursprünglichen Niveau.

### Beispiel 7

Der erfindungsgemäße Polyurethan-Haftklebstoff setzt sich wie folgt zusammen:
NCO / OH - Verhältnis: 1,00
Verhältnis Anzahl OH Triol A / Anzahl OH Triol B: 4,0

| | Rohstoff | Gewichtsanteil [Gew.-%] | Anzahl der OH- bzw. NCO-Gruppen, bezogen auf den angegebenen prozentualen Gewichtsanteil |
|---|---|---|---|
| A-Komponente | Voranol CP450 ® (Triol A) | 18,7 | 123,4 mmol OH |
| | Voranol CP6055 ® (Triol B) | 63,0 | 30,8 mmol OH |
| | Bismuttrisneodecanoat | 0,3 | |
| | Tinuvin 292 ® | 0,3 | |
| | Tinuvin 400 ® | 0,6 | |
| B-Komponente | Vestanat IPDI ® | 17,1 | 154,2 mmol NCO |

Die Prüfmuster (50 g/m² Polyurethan-Haftklebstoff auf einer 23 µm dicken Polyesterfolie, siehe oben) erzielten folgende Klebkräfte:
- 0,30 N/cm auf Stahl,
- 0,46 N/cm auf ABS,
- 0,50 N/cm auf PS,
- 0,60 N/cm auf PC
- 0,75 N/cm auf PVC.

Die Prüfmuster ließen sich jeweils ohne Rattern vom Prüfuntergrund abziehen.
Die Tackmessung (auf Stahl) ergab einen Wert von 0,9 N. Nach einer Woche Bestrahlung mit der Sonnenlichtlampe traten keine Veränderungen auf, weder farblich noch in der Klebkraft. Die Haftung auf Papier und Pappe war äußerst gering. Der Haftklebstoff ließ sich durch bloßes Schütteln von diesen trennen. Der Haftklebstoff wurde in einige Bücher, Zeitungen und Zeitschriften hineingeklebt. Auch nach einer Verklebungsdauer von einem halben Jahr ließen sich die entsprechend verklebten Seiten wieder problemlos voneinander trennen und der Haftklebstoff konnte mühelos entfernt werden, ohne Rückstände oder fettig aussehende Flecken zu hinterlassen und ohne die Papiere zu schädigen. Der Haftklebstoff klebte nicht an der Haut. Weiterhin war der Haftklebstoff abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprünglichen Niveau. Die Mehrfachverwendbarkeit wurde geprüft, indem der Haftklebstoff 20 Mal hintereinander auf PVC geklebt und wieder abgelöst wurde. Die Klebkraft lag anschließend immer noch auf dem ursprünglichen Niveau.

### Beispiel 8

Der erfindungsgemäße Polyurethan-Haftklebstoff setzt sich wie folgt zusammen:
NCO / OH - Verhältnis: 1,00
Verhältnis Anzahl OH Triol A / Anzahl OH Triol B: 0,1

| | Rohstoff | Gewichtsanteil [Gew.-%] | Anzahl der OH- bzw. NCO-Gruppen, bezogen auf den angegebenen prozentualen Gewichtsanteil |
|---|---|---|---|
| A-Komponente | Voranol CP450 ® (Triol A) | 0,7 | 4,5 mmol OH |
| | Voranol CP6055 ® (Triol B) | 92,6 | 45,4 mmol OH |
| | Bismuttrisneodecanoat | 0,3 | |
| | Tinuvin 292 ® | 0,3 | |
| | Tinuvin 400 ® | 0,6 | |
| B-Komponente | Vestanat IPDI ® | 5,5 | 49,9 mmol NCO |

Die Prüfmuster (50 g/m² Polyurethan-Haftklebstoff auf einer 23 µm dicken Polyesterfolie, siehe oben) erzielten folgende Klebkräfte:
- 0,40 N/cm auf Stahl,
- 0,54 N/cm auf ABS,
- 0,54 N/cm auf PS,
- 0,81 N/cm auf PC
- 0,90 N/cm auf PVC.

Die Prüfmuster ließen sich jeweils ohne Rattern vom Prüfuntergrund abziehen.
Die Tackmessung (auf Stahl) ergab einen Wert von 1,0 N. Nach einer Woche Bestrahlung mit der Sonnenlichtlampe traten keine Veränderungen auf, weder farblich noch in der Klebkraft. Die Haftung auf Papier und Pappe war äußerst gering. Der Haftklebstoff ließ sich durch bloßes Schütteln von diesen trennen. Der Haftklebstoff wurde in einige Bücher, Zeitungen und Zeitschriften hineingeklebt. Auch nach einer Verklebungsdauer von einem halben Jahr ließen sich die entsprechend verklebten Seiten wieder problemlos voneinander trennen und der Haftklebstoff konnte mühelos entfernt werden, ohne Rückstände oder fettig aussehende Flecken zu hinterlassen und ohne die Papiere zu schädigen. Der Haftklebstoff klebte nicht an der Haut. Weiterhin war der Haftklebstoff abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprünglichen Niveau. Die Mehrfachverwendbarkeit wurde geprüft, indem der Haftklebstoff 20 Mal hintereinander auf PVC geklebt und wieder abgelöst wurde. Die Klebkraft lag anschließend immer noch auf dem ursprünglichen Niveau.

### Beispiel 9

Der erfindungsgemäße Polyurethan-Haftklebstoff setzt sich wie folgt zusammen:
NCO / OH - Verhältnis: 1,00
Verhältnis Anzahl OH Triol A / Anzahl OH Triol B: 4,0

| | Rohstoff | Gewichtsanteil [Gew.-%] | Anzahl der OH- bzw. NCO-Gruppen, bezogen auf den angegebenen prozentualen Gewichtsanteil |
|---|---|---|---|
| A-Komponente | Voranol CP450 ® (Triol A) | 18,1 | 119,5 mmol OH |
| | Voranol CP6055 ® (Triol B) | 61,0 | 29,9 mmol OH |
| | Bismuttrisneodecanoat | 0,3 | |
| | Tinuvin 292 ® | 0,3 | |
| | Tinuvin 400 ® | 0,6 | |
| B-Komponente | Desmodur W ® | 19,7 | 149,4 mmol NCO |

Die Prüfmuster (50 g/m² Polyurethan-Haftklebstoff auf einer 23 µm dicken Polyesterfolie, siehe oben) erzielten folgende Klebkräfte:
- 0,38 N/cm auf Stahl,
- 0,50 N/cm auf ABS,
- 0,55 N/cm auf PS,
- 0,71 N/cm auf PC
- 0,91 N/cm auf PVC.

Die Prüfmuster ließen sich jeweils ohne Rattern vom Prüfuntergrund abziehen.
Die Tackmessung (auf Stahl) ergab einen Wert von 0,7 N. Nach einer Woche Bestrahlung mit der Sonnenlichtlampe traten keine Veränderungen auf, weder farblich noch in der Klebkraft. Die Haftung auf Papier und Pappe war äußerst gering. Der Haftklebstoff ließ sich durch bloßes Schütteln von diesen trennen. Der Haftklebstoff wurde in einige Bücher, Zeitungen und Zeitschriften hineingeklebt. Auch nach einer Verklebungsdauer von einem halben Jahr ließen sich die entsprechend verklebten Seiten wieder problemlos voneinander trennen und der Haftklebstoff konnte mühelos entfernt werden, ohne Rückstände oder fettig aussehende Flecken zu hinterlassen und ohne die Papiere zu schädigen. Der Haftklebstoff klebte nicht an der Haut. Weiterhin war der Haftklebstoff abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprünglichen Niveau. Die Mehrfachverwendbarkeit wurde geprüft, indem der Haftklebstoff 20 Mal hintereinander auf PVC geklebt und wieder abgelöst wurde. Die Klebkraft lag anschließend immer noch auf dem ursprünglichen Niveau.

### Beispiel 10

Der erfindungsgemäße Polyurethan-Haftklebstoff setzt sich wie folgt zusammen:
NCO / OH - Verhältnis: 1,00
Verhältnis Anzahl OH Triol A / Anzahl OH Triol B: 4,0

| | Rohstoff | Gewichtsanteil [Gew.-%] | Anzahl der OH- bzw. NCO-Gruppen, bezogen auf den angegebenen prozentualen Gewichtsanteil |
|---|---|---|---|
| A-Komponente | Voranol CP450 ® (Triol A) | 16,6 | 109,5 mmol OH |
| | Voranol CP6055 ® (Triol B) | 55,8 | 27,4 mmol OH |
| | Bismuttrisneodecanoat | 0,3 | |
| | Tinuvin 292 ® | 0,3 | |
| | Tinuvin 400 ® | 0,6 | |
| B-Komponente | Desmodur N3300 ® | 26,4 | 136,1 mmol NCO |

Die Prüfmuster (50 g/m² Polyurethan-Haftklebstoff auf einer 23 µm dicken Polyesterfolie, siehe oben) erzielten folgende Klebkräfte:
- 0,01 N/cm auf Stahl,
- 0,03 N/cm auf ABS,
- 0,03 N/cm auf PS,
- 0,04 N/cm auf PC
- 0,04 N/cm auf PVC.

Die Prüfmuster ließen sich jeweils ohne Rattern vom Prüfuntergrund abziehen.
Die Tackmessung (auf Stahl) ergab einen Wert von 0,1 N. Nach einer Woche Bestrahlung mit der Sonnenlichtlampe traten keine Veränderungen auf, weder farblich noch in der Klebkraft. Die Haftung auf Papier und Pappe war äußerst gering. Der Haftklebstoff ließ sich durch bloßes Schütteln von diesen trennen. Der Haftklebstoff wurde in einige Bücher, Zeitungen und Zeitschriften hineingeklebt. Auch nach einer Verklebungsdauer von einem halben Jahr ließen sich die entsprechend verklebten Seiten wieder problemlos voneinander trennen und der Haftklebstoff konnte mühelos entfernt werden, ohne Rückstände oder fettig aussehende Flecken zu hinterlassen und ohne die Papiere zu schädigen. Der Haftklebstoff klebte nicht an der Haut. Weiterhin war der Haftklebstoff abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprünglichen Niveau. Die Mehrfachverwendbarkeit wurde geprüft, indem der Haftklebstoff 20 Mal hintereinander auf PVC geklebt und wieder abgelöst wurde. Die Klebkraft lag anschließend immer noch auf dem ursprünglichen Niveau.

### Vergleichsbeispiele

### Vergleichsbeispiel 1

NCO / OH - Verhältnis: 0,60
Verhältnis Anzahl OH Triol A / Anzahl OH Triol B: 4,0

| | Rohstoff | Gewichtsanteil [Gew.-%] | Anzahl der OH- bzw. NCO-Gruppen, bezogen auf den angegebenen prozentualen Gewichtsanteil |
|---|---|---|---|
| A-Komponente | Voranol CP450 ® (Triol A) | 22,4 | 154,0 mmol OH |
| | Voranol CP4755 ® (Triol B) | 62,6 | 38,5 mmol OH |
| | Bismuttrisneodecanoat | 0,3 | |
| | Tinuvin 292 ® | 0,3 | |
| | Tinuvin 400 ® | 0,6 | |
| B-Komponente | Vestanat IPDI ® | 12,8 | 115,5 mmol NCO |

Die Prüfmuster (50 g/m² Polyurethan-Haftklebstoff auf einer 23 µm dicken Polyesterfolie, siehe oben) erzielten eine Klebkraft auf Stahl von 6,2 N/cm. Der Haftklebstoff klebte sehr stark auf Papier, so dass er keineswegs einfach vom Papier abgeschüttelt werden konnte. Weiterhin hinterließ er schon nach kurzer Zeit fettig aussehende Flecken auf dem Papier

### Vergleichsbeispiel 2

NCO / OH - Verhältnis: 1,0
Verhältnis Anzahl OH Triol A / Anzahl OH Triol B: 20,0

| | Rohstoff | Gewichtsanteil [Gew.-%] | Anzahl der OH- bzw. NCO-Gruppen, bezogen auf den angegebenen prozentualen Gewichtsanteil |
|---|---|---|---|
| A-Komponente | Voranol CP450 ® (Triol A) | 42,9 | 282,6 mmol OH |
| | Voranol CP4755 ® (Triol B) | 23,0 | 14,1 mmol OH |
| | Bismuttrisneodecanoat | 0,3 | |
| | Tinuvin 292 ® | 0,3 | |
| | Tinuvin 400 ® | 0,6 | |
| B-Komponente | Vestanat IPDI ® | 33,0 | 296,7 mmol NCO |

Die Prüfmuster (50 g/m² Polyurethan auf einer 23 µm dicken Polyesterfolie, siehe oben) erzielten eine Klebkraft auf Stahl von 0,0 N/cm. Statt eines Haftklebstoffs war ein folienartiges, tackfreies Polyurethan entstanden.

## Patentansprüche

1. Haftklebstoff auf Basis von Polyurethan, **dadurch gekennzeichnet, dass** sich das Polyurethan aus folgenden katalytisch miteinander zur Reaktion gebrachten Ausgangsstoffen in den angegebenen Verhältnissen zusammensetzt:
a) mindestens einem aliphatischen oder alicyclischen Polyisocyanat, wobei deren Funktionalität jeweils kleiner oder gleich drei ist,
b) einer Kombination aus mindestens einem Triol A auf Basis Polypropylenglykol mit einem mittleren zahlengemittelten Molekulargewicht Mₙ von kleiner oder gleich 1000 und einem Triol B auf Basis Polypropylenglykol mit einem mittleren zahlengemittelten Molekulargewicht Mₙ von größer oder gleich 1000, bevorzugt größer oder gleich 3000,
wobei das Verhältnis der Anzahl der Hydroxylgruppen der Triol-Komponente A zu der Anzahl der Hydroxylgruppen der Triol-Komponente B zwischen größer 0 und 12 liegt,
wobei das Verhältnis der Anzahl der Isocyanat-Gruppen zur Gesamtanzahl der Hydroxylgruppen zwischen 0,8 und 1,15, bevorzugt zwischen 0,95 und 1,05 liegt,
wobei der Katalysator für die Reaktion zum Polyurethan eine Bismut und Kohlenstoff enthaltende Verbindung, bevorzugt ein Bismutcarboxylat oder ein Bismutcarboxylat-Derivat ist oder enthält.

2. Haftklebstoff nach Anspruch 1, **dadurch gekennzeichnet, dass** als aliphatische oder alicyclische Polyisocyanante Diisocyanate mit jeweils unsymmetrischer Molekülstruktur verwendet werden.

3. Haftklebstoff nach Anspruch 1 oder 2, **dadurch gekennzeichnet, dass** das Polyisocyanat Dicyclohexylmethandiisocyanat, bevorzugt Isophorondiisocyanat ist.

4. Haftklebstoff nach zumindest einem der Ansprüche 1 bis 3, **dadurch gekennzeichnet, dass** als Polypropylenglykole konventionell, das heißt im Regelfall mit einem basischen Katalysator wie zum Beispiel Kaliumhydroxid, hergestellte Polypropylenglykole, als auch die besonders reinen Polypropylenglykole, die DMC (Double metal cyanide)-katalysiert hergestellt werden, eingesetzt werden.,

5. Haftklebstoff nach zumindest einem der vorherigen Ansprüche, **dadurch gekennzeichnet, dass** Rezeptierungsbestandteile wie Katalysatoren, Alterungsschutzmittel (Antioxidantien), Lichtschutzmittel, UV-Absorber, rheologische Additive sowie sonstige Hilfs- und Zusatzstoffe zugemischt sind.

6. Haftklebstoff nach zumindest einem der vorherigen Ansprüche, **dadurch gekennzeichnet, dass** der Klebkraftbereich des Haftklebstoffs zwischen 0,01 und 4,0 N/cm liegt, vorzugsweise zwischen 0,01 und 2,0 N/cm.

7. Haftklebstoff nach zumindest einem der vorherigen Ansprüche, **dadurch gekennzeichnet, dass** dieser in Form von Stanzlingen oder geschnittenen Formteilen vorliegt.

8. Verfahren zur Herstellung eines Haftklebstoffs nach zumindest einem der vorherigen Ansprüche, wobei
a) in einem Behälter A die vorgemischte Polypropylenglykol-Kombination (Polyol-Komponente) und in einem Behälter B die Isocyanat-Komponente vorgelegt werden, wobei gegebenenfalls die weiteren Rezeptierungsbestandteile diesen Komponenten bereits zuvor in einem üblichen Mischverfahren zugemischt wurden,
b) die Polyol- und die Isocyanat-Komponente über Präzisionspumpen durch den Mischkopf oder das Mischrohr einer Mehrkomponenten-Misch- und Dosieranlage gefördert, dort homogen vermischt und somit zur Reaktion gebracht werden,
c) die somit gemischten, miteinander chemisch reagierenden Komponenten unmittelbar danach auf ein bahnförmiges Trägermaterial aufgebracht werden, das sich bevorzugt mit konstanter Geschwindigkeit bewegt,
d) das mit der reagierenden Polyurethanmasse beschichtete Trägermaterial durch einen Wärmekanal geführt wird, in dem die Polyurethanmasse zum Haftklebstoff aushärtet.
e) das beschichtete Trägermaterial abschließend in einer Wickelstation aufgewickelt wird.

9. Verfahren zur Herstellung eines Haftklebstoffs nach zumindest einem der vorherigen Ansprüche, **dadurch gekennzeichnet, dass** die Herstellung ohne Lösemittel erfolgt.

10. Verfahren zur Herstellung eines Haftklebstoffs nach zumindest einem der vorherigen Ansprüche, **dadurch gekennzeichnet, dass** die Herstellung ohne Wasserzusatz erfolgt.

11. Verwendung des Haftklebstoffs nach zumindest einem der vorherigen Ansprüche zur Herstellung von selbstklebenden Artikeln.

12. Verwendung des Haftklebstoffs nach zumindest einem der vorherigen Ansprüche zur Herstellung von Adhäsionsfolien.

13. Verwendung des Haftklebstoffs nach zumindest einem der vorherigen Ansprüche zur beschädigungs- und rückstandsfrei wieder ablösbaren Befestigung von leichten Gegenständen mit empfindlichen Oberflächen, zum Beispiel aus polarem Kunststoff, Glas oder Metall.

## Claims

1. Polyurethane-based pressure-sensitive adhesive, **characterized in that** the polyurethane is composed of the following starting materials which are reacted catalytically with one another in the stated proportions:
a) at least one aliphatic or alicyclic polyisocyanate having a functionality of in each case less than or equal to three,
b) a combination of at least one triol A based on polypropylene glycol and having an average number-averaged molecular weight Mₙ of less than or equal to 1000 and a triol B based on polypropylene glycol and having an average number-averaged molecular weight Mₙ of greater than or equal to 1000, preferably greater than or equal to 3000,
the ratio of the number of hydroxyl groups of the triol component A to the number of hydroxyl groups of the triol component B being between greater than 0 and 12,
the ratio of the number of isocyanate groups to the total number of hydroxyl groups being between 0.8 and 1.15, preferably between 0.95 and 1.05,
the catalyst for the reaction to the polyurethane consisting of or comprising a compound comprising bismuth and carbon, preferably a bismuth carboxylate or a bismuth carboxylate derivative.

2. Pressure-sensitive adhesive according to Claim 1, **characterized in that** the aliphatic or alicyclic polyisocyanates used are diisocyanates having in each case an asymmetrical molecular structure.

3. Pressure-sensitive adhesive according to Claim 1 or 2, **characterized in that** the polyisocyanate is dicyclohexylmethane diisocyanate, preferably isophorone diisocyanate.

4. Pressure-sensitive adhesive according to at least one of Claims 1 to 3, **characterized in that** as polypropylene glycols use is made of polypropylene glycols prepared conventionally, in other words, in general, with a basic catalyst such as potassium hydroxide, for example, and also of the particularly pure polypropylene glycols prepared with DMC (double metal cyanide) catalysis.

5. Pressure-sensitive adhesive according to at least one of the preceding claims, **characterized in that** formulating ingredients such as catalysts, ageing inhibitors (antioxidants), light stabilizers, UV absorbers, rheological additives, and other auxiliaries and additives have been mixed in.

6. Pressure-sensitive adhesive according to at least one of the preceding claims, **characterized in that** the bond strength range of the pressure-sensitive adhesive is between 0.01 and 4.0 N/cm, preferably between 0.01 and 2.0 N/cm.

7. Pressure-sensitive adhesive according to at least one of the preceding claims, **characterized in that** it is in the form of diecuts or cut shaped parts.

8. Process for preparing a pressure-sensitive adhesive according to at least one of the preceding claims, where
a) a vessel A is charged with the premixed polypropylene glycol combination (polyol component) and a vessel B is charged with the isocyanate component, it being possible for the other formulating ingredients to have been mixed into these components beforehand in a standard mixing procedure,
b) the polyol component and the isocyanate component are conveyed via precision pumps through the mixing head or mixing tube of a multicomponent mixing and metering unit, where they are homogenously mixed and so brought to reaction,
c) the chemically inter-reacting components mixed in this way are applied immediately thereafter to a sheet-like backing material which is preferably moving at constant speed,
d) the backing material coated with the reactive polyurethane composition is passed through a heating tunnel in which the polyurethane composition cures to the pressure-sensitive adhesive,
e) finally the coated backing material is wound up in a winding station.

9. Process for preparing a pressure-sensitive adhesive according to at least one of the preceding claims, **characterized in that** the preparation takes place without solvent.

10. Process for preparing a pressure-sensitive adhesive according to at least one of the preceding claims, **characterized in that** the preparation takes place without addition of water.

11. Use of the pressure-sensitive adhesive according to at least one of the preceding claims for producing self-adhesive articles.

12. Use of the pressure-sensitive adhesive according to one of the preceding claims for producing adhesion films.

13. Use of the pressure-sensitive adhesive according to at least one of the preceding claims for the redetachable fastening without damage or residue of light articles having sensitive surfaces, made for example from polar plastic, glass or metal.

## Revendications

1. Autoadhésif à base de polyuréthane, **caractérisé en ce que** le polyuréthane est constitué par les substances de départ suivantes, amenées à réagir par voie catalytique les unes avec les autres, dans les rapports indiquées :
a) au moins un polyisocyanate aliphatique ou alicyclique, où sa fonctionnalité est à chaque fois inférieure ou égale à trois,
b) une combinaison d'au moins un triol A à base de polypropylèneglycol présentant un poids moléculaire numérique moyen Mₙ inférieur ou égal à 1000 et d'un triol B à base de polypropylèneglycol présentant un poids moléculaire numérique moyen Mₙ supérieur ou égal à 1000, de préférence supérieur ou égal à 3000,
où le rapport du nombre de groupes hydroxyle du composant triol A au nombre de groupes hydroxyle du composant triol B est situé entre plus de 0 et 12,
où le rapport du nombre de groupes isocyanate au nombre total des groupes hydroxyle est situé entre 0,8 et 1,15, de préférence entre 0,95 et 1,05, où le catalyseur pour la réaction en polyuréthane est ou contient un composé contenant du bismuth et du carbone, de préférence un carboxylate de bismuth ou un dérivé de carboxylate de bismuth.

2. Autoadhésif selon la revendication 1, **caractérisé en ce qu'**on utilise comme polyisocyanates aliphatiques ou alicycliques des diisocyanates présentant à chaque fois une structure moléculaire asymétrique.

3. Autoadhésif selon la revendication 1 ou 2, **caractérisé en ce que** le polyisocyanate est un dicyclohexylméthanediisocyanate, de préférence l'isophoronediisocyanate.

4. Autoadhésif selon au moins l'une quelconque des revendications 1 à 3, **caractérisé en ce qu'**on utilise comme polypropylèneglycols des polypropylèneglycols préparés classiquement, c'est-à-dire généralement avec un catalyseur basique, tel que par exemple l'hydroxyde de potassium, ainsi que des polypropylèneglycols particulièrement purs, qui sont préparés par voie catalytique avec des DMC (Double metal cyanide - cyanures métalliques doubles).

5. Autoadhésif selon au moins l'une quelconque des revendications précédentes, **caractérisé en ce que** des constituants de formulation, tels que les catalyseurs, les agents de protection contre le vieillissement (antioxydants), les agents de protection contre la lumière, les absorbants des UV, les additifs rhéologiques ainsi que d'autres adjuvants et additifs, y sont mélangés.

6. Autoadhésif selon au moins l'une quelconque des revendications précédentes, **caractérisé en ce que** la plage d'adhésivité de l'autoadhésif est située entre 0,01 et 4,0 N/cm, de préférence entre 0,01 et 2,0 N/cm.

7. Autoadhésif selon au moins l'une quelconque des revendications précédentes, **caractérisé en ce qu'**il se trouve sous forme de pièces découpées ou de pièces façonnées coupées.

8. Procédé pour la préparation d'un autoadhésif selon au moins l'une quelconque des revendications précédentes, où
a) on dispose dans un récipient A la combinaison mélangée au préalable de polypropylèneglycol (composant polyol) et dans un récipient B le composant isocyanate, où le cas échéant les autres constituants de formulation ont déjà été ajoutés en les mélangeant au préalable à ces composants dans un procédé de mélange usuel,
b) on transporte le composant polyol et le composant isocyanate via des pompes de précision au travers de la tête de mélange ou du tube de mélange d'une installation de mélange et de dosage de plusieurs composants, on les y mélange de manière homogène et on les y amène à réagir,
c) on applique les composants ainsi mélangés, qui réagissent chimiquement les uns avec les autres de manière directement consécutive sur un matériau support en forme de bande, qui se déplace de préférence à une vitesse constante,
d) le matériau support revêtu avec la masse de polyuréthane en réaction est guidé au travers d'un canal chauffant, dans lequel la masse de polyuréthane durcit en autoadhésif,
e) le matériau support revêtu est finalement enroulé dans un poste d'enroulement.

9. Procédé pour la préparation d'un autoadhésif selon au moins l'une quelconque des revendications précédentes, **caractérisé en ce que** la préparation est réalisée sans solvant.

10. Procédé pour la préparation d'un autoadhésif selon au moins l'une quelconque des revendications précédentes, **caractérisé en ce que** la préparation est réalisée sans addition d'eau.

11. Utilisation de l'autoadhésif selon au moins l'une quelconque des revendications précédentes pour la préparation d'objets autoadhésifs.

12. Utilisation de l'autoadhésif selon au moins l'une quelconque des revendications précédentes pour la préparation de feuilles adhésives.

13. Utilisation de l'autoadhésif selon au moins l'une quelconque des revendications précédentes pour la fixation amovible sans dégradation ni résidus d'objets légers avec des surfaces sensibles, par exemple en matériau synthétique polaire, en verre ou en métal.
